# EUROPEAN PATENT APPLICATION

(11) **EP 4 850 972 A1**
(43) Date of publication of application: **09.12.2026**
(21) Application number: 25863805.5
(22) Date of filing: 07.07.2025
(51) Int. Cl.: B60L 53/80, B60L 53/68, B60L 53/30, B60L 58/10

(54) **ELECTRONIC DEVICE AND BATTERY SELECTION METHOD THEREFOR**

(30) Priority: 04.09.2024 KR 20240120211
(71) Applicant: LG Energy Solution, Ltd., Seoul 07335 (KR)
(72) Inventor: KIM, Sungwon, Daejeon 34122 (KR)
(74) Representative: BCKIP Part mbB
(86) International application number: PCT/KR2025/009766
(87) International publication number: WO 2026/054275

(57) **Abstract**

An electronic device according to one embodiment of the present disclosure may comprise a communication circuit and a processor operatively connected to the communication circuit, wherein the processor can acquire, by using the communication circuit, battery data related to one or more replacement batteries disposed in a battery replacement station, user data related to a user operating a vehicle, and driving data related to driving of the vehicle, select, on the basis of the battery data, the user data and the driving data, a replacement battery to be provided to the user among the one or more replacement batteries, and provide the user with information about the selected replacement battery.

## Description

### Technical Field

The present disclosure claims the benefit based on Korean Patent Application No. 10-2024-0120211 filed on September 4, 2024, which is incorporated herein by reference in its entirety.

Example embodiments of the present disclosure relate to an electronic apparatus and a method of selecting a battery thereof.

### Background Art

Battery swapping stations are designed to accommodate and manage a plurality of swappable batteries and to be easily used by users of electric vehicles such as electric cars, electric scooters, and electric bicycles. For example, battery swapping stations may charge swappable batteries by using power from an external power device and provide fully charged swappable batteries to users of electric vehicles.

A user may remove a fully charged swappable battery from a battery swapping station and install and use the fully charged swappable battery in an electric vehicle. In addition, the user may remove a depleted swappable battery from an electric vehicle and install and charge the depleted swappable battery in a battery swapping station.

Generally, as only one type of swappable battery is disposed in a battery swapping station, user characteristics and preferences have not been considered when providing swappable batteries to electric vehicle users. However, as various types of swappable batteries (for example, lithium-sulfur batteries, lithium-metal batteries, silicon negative electrode batteries, all-solid-state batteries, nickel cobalt manganese (NCM) batteries, and lithium iron phosphate (LFP) batteries) have recently been disposed in battery swapping stations, and as users of electric vehicles have different characteristics, driving patterns, and preferences, a technology to provide swappable batteries reflecting user characteristics and preferences is required.

### Detailed Description of the Invention

### Technical Goals

According to an example embodiment of the present disclosure, there is provided an electronic apparatus that selects and provides a swappable battery to a user among swappable batteries disposed in a battery swapping station, by reflecting a characteristic of the user who operates a vehicle and a driving pattern of a vehicle, and a method of selecting a battery thereof.

Technical goals to be achieved by the example embodiments of the present disclosure are not limited to technical goals described above, and other technical goals may be inferred from example embodiments below.

### Technical solutions

An electronic apparatus according to an example embodiment of the present disclosure, may include a communication circuit and a processor functionally connected to the communication circuit. The processor may be, by using the communication circuit, configured to obtain battery data associated with one or more swappable batteries disposed in a battery swapping station, user data associated with a user who operates a vehicle, and driving data associated with driving of the vehicle, based on the battery data, the user data, and the driving data, configured to select a swappable battery among the one or more swappable batteries to provide to the user, and configured to provide information about the swappable battery that is selected.

In the electronic apparatus according to an example embodiment of the present disclosure, the user data may include maximum weight information indicating a maximum weight of a swappable battery movable by the user. The processor may be, based on the maximum weight information, further configured to select the swappable battery having a weight of less than or equal to the maximum weight among the one or more swappable batteries.

In the electronic apparatus according to an example embodiment of the present disclosure, the processor may be, by using the communication circuit, based on the battery data, further configured to provide weight information indicating a weight of the one or more swappable batteries to a user terminal. The maximum weight information may be based on an input of the user of the maximum weight in response to the weight information provided through the user terminal.

In the electronic apparatus according to an example embodiment of the present disclosure, the driving data may include battery swapping information indicating a battery swapping cycle of the vehicle. The processor may be, based on the battery swapping information, further configured to analyze battery usage of the user, and based on the battery usage that is analyzed, further configured to select the swappable battery among the one or more swappable batteries to provide to the user.

In the electronic apparatus according to an example embodiment of the present disclosure, the driving data may include driving information indicating at least one of driving speed and driving acceleration of the vehicle. The processor may be, based on the driving information, further configured to analyze a driving pattern of the user, and based on the driving pattern that is analyzed, further configured to select the swappable battery to provide to the user among the one or more swappable batteries.

The electronic apparatus according to an example embodiment of the present disclosure may further include a memory that stores history data indicating a past history of the user of selecting a swappable battery. The processor may be, based on the history data stored in the memory, further configured to analyze a battery preference of the user, and, based on the battery preference that is analyzed, further configured to select the swappable battery to provide to the user among the one or more swappable batteries.

In the electronic apparatus according to an example embodiment of the present disclosure, the battery preference may include a preference of the user with regard to a fee for swappable battery usage.

A method of selecting a battery performed by an electronic apparatus according to an example embodiment of the present disclosure, the method including obtaining battery data associated with one or more swappable batteries disposed in a battery swapping station, user data associated with a user who operates a vehicle, and driving data associated with driving of the vehicle, based on the battery data, the user data, and the driving data, selecting a swappable battery among the one or more swappable batteries to provide to the user, and providing information about the swappable battery that is selected.

In the method according to an example embodiment of the present disclosure, the user data may include maximum weight information indicating a maximum weight of a swappable battery movable by the user. The selecting of the swappable battery to provide to the user, based on the maximum weight information, may include selecting the swappable battery having a weight of less than or equal to the maximum weight among the one or more swappable batteries.

The method according to an example embodiment of the present disclosure may further include, based on the battery data, providing weight information indicating a weight of the one or more swappable batteries to a user terminal. The maximum weight information may be based on an input of the user of the maximum weight in response to the weight information provided through the user terminal.

In the method according to an example embodiment of the present disclosure, the driving data may include battery swapping information indicating a battery swapping cycle of the vehicle. The selecting of the swappable battery to provide to the user may include, based on the battery swapping information, analyzing a battery usage of the user, and, based on the battery usage that is analyzed, selecting the swappable battery to provide to the user among the one or more swappable batteries.

In the method according to an example embodiment of the present disclosure, the driving data may include driving information indicating at least one of driving distance, driving time, speed, and acceleration of the vehicle. The selecting of the swappable battery to provide to the user may include, based on the driving information, analyzing a driving pattern of the user, and, based on the driving pattern that is analyzed, selecting the swappable battery to provide to the user among the one or more swappable batteries.

In the method according to an example embodiment of the present disclosure, the selecting of the swappable battery to provide to the user may include, based on history data indicating a past history of the user of selecting a swappable battery, analyzing a battery preference of the user, and, based on the battery preference that is analyzed, selecting the swappable battery to provide to the user among the one or more swappable batteries.

In the method according to an example embodiment of the present disclosure, the battery preference may include a preference of the user with regard to a fee for swappable battery usage.

### Effects of the Invention

According to example embodiments of the present disclosure, it is possible to improve user experience for a battery swapping station by selecting and providing a swappable battery reflecting at least one of a physical condition, a driving pattern, and a preference of a user who operates a vehicle.

Effects of the present disclosure are not limited to the aforementioned effects, and other effects not mentioned will be clearly understood by those skilled in the art from the description of the claims.

### Brief Description of Drawings

FIG. 1 is a diagram illustrating a battery swapping system according to an example embodiment of the present disclosure.
FIG. 2 is a block diagram of an electronic apparatus according to an example embodiment of the present disclosure.
FIG. 3 is a flowchart of an operation of an electronic apparatus according to an example embodiment of the present disclosure.
FIG. 4 is a flowchart of an operation of an electronic apparatus according to an example embodiment of the present disclosure.
FIG. 5 is a flowchart of an operation of an electronic apparatus according to an example embodiment of the present disclosure.
FIG. 6 is a flowchart of an operation of an electronic apparatus according to an example embodiment of the present disclosure.
FIG. 7 is a flowchart of an operation of an electronic apparatus according to an example embodiment of the present disclosure.

### Mode for Carrying Out the Invention

In describing the example embodiments, descriptions of technical contents that are well known in the art to which the present disclosure belongs and are not directly related to the present specification will be omitted. This is to more clearly communicate without obscure the subject matter of the present specification by omitting unnecessary description.

For the same reason, in the accompanying drawings, some components are exaggerated, omitted or schematically illustrated. In addition, the size of each component does not fully reflect the actual size. The same or corresponding components in each drawing are given the same reference numerals.

Advantages and features of the present disclosure and methods of achieving them will be apparent from the following example embodiments that will be described in more detail with reference to the accompanying drawings. It should be noted, however, that the present disclosure is not limited to the following example embodiments, and may be implemented in various forms. Accordingly, the example embodiments are provided only to disclose the present disclosure and let those skilled in the art know the category of the present disclosure. In the drawings, embodiments of the present disclosure are not limited to the specific examples provided herein and are exaggerated for clarity. The same reference numerals or the same reference designators denote the same elements throughout the specification.

At this point, it will be understood that each block of the flowchart illustrations and combinations of flowchart illustrations may be performed by computer program instructions. Since these computer program instructions may be mounted on a processor of a general purpose computer, special purpose computer, or other programmable data processing equipment, those instructions executed through the computer or the processor of other programmable data processing equipment may create a means to perform the functions be described in flowchart block(s). These computer program instructions may be stored in a computer usable or computer readable memory that can be directed to a computer or other programmable data processing equipment to implement functionality in a particular manner, such that the instructions stored in that computer usable or computer readable memory produce an article of manufacture containing instruction means for performing the functions described in the flowchart block(s). Computer program instructions may also be mounted on a computer or other programmable data processing equipment, such that a series of operating steps may be performed on the computer or other programmable data processing equipment to create a computer-implemented process, such that the instructions executed on the computer or other programmable data processing equipment may also provide steps for performing the functions described in the flowchart block(s).

In addition, each block may represent a portion of a module, segment, or code that includes one or more executable instructions for executing a specified logical function(s). It should also be noted that in some alternative implementations, the functions noted in the blocks may occur out of order. For example, the two blocks shown in succession may in fact be executed substantially concurrently, or the blocks may sometimes be executed in the reverse order, depending on the corresponding function.

At this point, the term "unit" may refer to a software or a hardware element such as a field-programmable gate array (FPGA) or an application-specific integrated circuit (ASIC), and a "unit" may perform predetermined roles. However, the "unit" is not limited to software or hardware. A "unit" may be configured to be in an addressable storage medium or to regenerate one or more processors. Accordingly, as an example, a "unit" may include software elements, object-oriented software elements, elements such as class elements and task elements, processes, functions, properties, procedures, subroutines, segments of program code, drivers, firmware, microcode, a circuit, data, a database, data structures, tables, arrays, and variables. A function provided within elements and "units" may be combined into a smaller number of elements and "units", or separated further into additional elements and "units". In addition, components and "units" may be implemented to regenerate one or more CPUs within a device or a secure multimedia card.

The expression "at least one of A, B, and C" may indicate the following meaning including: A alone; B alone; C alone; both A and B together; both A and C together; both B and C together; or all three of A, B, and C together.

In the present disclosure, a "terminal" may be implemented as a computer or a portable terminal capable of accessing a server or another terminal through a network. Here, the computer may include, for example, a laptop computer, a desktop computer, and a notebook equipped with a web browser. The portable terminal may be a wireless communication device ensuring a portability and a mobility, and include any type of handheld wireless communication device, for example, a tablet PC, a smartphone, a communication-based terminal such as international mobile telecommunication (IMT), code division multiple access (CDMA), W-code division multiple access (W-CDMA), and long term evolution (LTE).

In the following description, example embodiments of the present disclosure will be described in detail with reference to the drawings so that those skilled in the art can easily carry out the present disclosure. The present disclosure may be embodied in many different forms and is not limited to the example embodiments described herein.

Hereinafter, example embodiments of the present disclosure will be described with reference to the drawings.

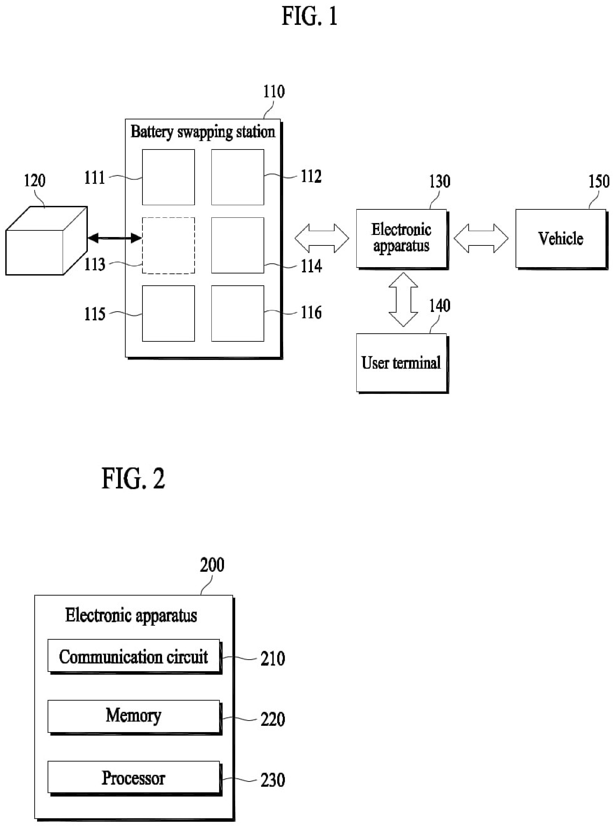

FIG. 1 is a diagram illustrating a battery swapping system according to an example embodiment of the present disclosure.

Referring to FIG. 1, the battery swapping system may include a battery swapping station 110, a swappable battery 120, an electronic apparatus 130, a user terminal 140, and a vehicle 150.

According to an example embodiment, the battery swapping station 110 may include a plurality of slots 111, 112, 113, 114, 115, and 116 that may accommodate the swappable battery 120 to be charged. When the swappable battery 120 is accommodated in the plurality of slots 111, 112, 113, 114, 115, and 116, the battery swapping station 110 may supply power to the accommodated swappable battery 120.

According to an example embodiment, when the swappable battery 120 that a user of the vehicle 150 used is returned, and a charging fee is paid by the user, the battery swapping station 110 may provide one among other swappable batteries that are fully charged to the user. For example, when the user returns the swappable battery 120 that the user used to a slot 113 of the battery swapping station 110, the swappable battery 120 may be installed in the slot 113. Subsequently, when the user pays a charging fee, another swappable battery installed in one of other slots 111, 112, 114, 115, and 116 may be removed from the slot and provided to the user.

According to an example embodiment, the swappable battery 120 may be a battery pack that is installed in the vehicle 150 and used. The swappable battery 120 may be removed from the vehicle 150 and accommodated in one of the plurality of slots 111, 112, 113, 114, 115, and 116 of the battery swapping station 110. The swappable battery 120 accommodated in one of the plurality of slots 111, 112, 113, 114, 115, and 116 may be supplied with power from the battery swapping station 110.

According to an example embodiment, the electronic apparatus 130 may be implemented as a notebook, a desktop, a laptop, or a server computing device that obtains data from an external electronic apparatus (for example, the battery swapping station 110, the user terminal 140, and the vehicle 150) and processes the data.

According to an example embodiment, the electronic apparatus 130 may have a wired and/or wireless connection to the battery swapping station 110, the user terminal 140, and the vehicle 150. Here, the user terminal 140 may be a mobile device (for example, a cellphone, a smartphone, a smartpad), or a personal computer (PC). In addition, the vehicle 150 may be an electric two-wheeled vehicle powered by power supplied from the swappable battery 120.

According to an example embodiment, the electronic apparatus 130 may have a communication connection to the battery swapping station 110, the user terminal 140, and the vehicle 150 via a wired and/or a wireless network. According to an example embodiment, a wired network may be based on a local area network (LAN) communication or a power line communication. According to an example embodiment, a wireless network may be based on a short-range communication network (for example, Bluetooth, wireless fidelity (WiFi), or infrared data association (IrDA)), or a long-range communication network (WAN) (a cellular network, a 4G network, or a 5G network).

According to an example embodiment, the electronic apparatus 130 may select a swappable battery to provide to the user among one or more swappable batteries disposed in the battery swapping station 110 based on data obtained from the battery swapping station 110, the user terminal 140, and the vehicle 150 via the communication connection and provide information about the selected swappable battery to the user.

FIG. 2 is a block diagram of an electronic apparatus according to an example embodiment of the present disclosure. As the electronic apparatus 200 of FIG. 2 may be the same configuration as the electronic apparatus 130 of FIG. 1, description overlapping with the aforementioned content may be omitted, and the electronic apparatus 200 of FIG. 2 may be described using configurations of FIG. 1.

Referring to FIG. 2, the electronic apparatus 200 may include a communication circuit 210, a memory 220, and a processor 230. According to an example embodiment, the electronic apparatus 200 illustrated in FIG. 2 may further include at least one element (for example, a display, an input device, or an output device) in addition to the elements illustrated in FIG. 2.

According to an example embodiment, the communication circuit 210 may establish a wired communication channel and/or a wireless communication channel between the electronic apparatus 200 and an external electronic apparatus (for example, the battery swapping station 110, the user terminal 140, and the vehicle 150), and transmit and receive data to and from the external electronic apparatus through the established communication channel.

According to an example embodiment, the memory 220 may include a volatile memory and/or a non-volatile memory.

According to an example embodiment, the memory 220 may store data used by at least one element (for example, the processor 230) of the electronic apparatus 200. For example, data may include software (or, an instruction associated with the software), input data, or output data. According to an example embodiment, when executed by the processor 230, an instruction may allow the electronic apparatus 200 to perform operations defined by the instruction.

According to an example embodiment, the memory 220 may store history data indicating a user's past history of selecting a swappable battery. The history data may include at least one of component information, weight information, maximum output information, capacity information, and charge information of the swappable battery that the user previously selected.

According to an example embodiment, the processor 230 may be implemented as a computer or a similar device depending on hardware, software, or a combination thereof. Hardware-wise, the processor 230 may be implemented as a form of an electronic circuit performing a control function by processing an electrical signal, and software-wise, implemented as a form of a program operating a hardware processor 230. According to an example embodiment, the processor 230 may be functionally connected to an element (for example, the communication circuit 210 and/or the memory 220) included in the electronic apparatus 200 and control a connected element.

According to an example embodiment, the processor 230 may include a central processing unit (CPU), an application processor, a graphics processing unit (GPU), a neural processing unit (NPU), an image signal processor (ISP), a sensor hub processor, and a communication processor.

Meanwhile, if description below does not specifically mention, it may be construed that an operation of the electronic apparatus 200 is performed by a control of the processor 230.

According to an example embodiment, the electronic apparatus 200 may obtain battery data associated with one or more swappable batteries disposed in the battery swapping station 110 by using the communication circuit 210. The battery data may include at least one of composition information, weight information, maximum output information, capacity information, and fee information of a swappable battery accommodated in the plurality of slots 111, 112, 113, 114, 115, and 116 of the battery swapping station 110.

According to an example embodiment, the electronic apparatus 200 may identify one or more swappable batteries disposed in the battery swapping station 110 at present, based on the battery data. The electronic apparatus 200 may select a swappable battery to provide to the user among the one or more swappable batteries identified based on content described later.

According to an example embodiment, the electronic apparatus 200 may obtain user data associated with the user who operates the vehicle 150 from the user terminal 140 via the communication connection. The user data may include maximum weight information indicating a maximum weight of a swappable battery movable by the user.

According to an example embodiment, before obtaining the maximum weight information, the electronic apparatus 200 may provide weight information that indicates a weight of one or more swappable batteries disposed in the battery swapping station 110 to the user terminal 140 based on the battery data. For example, the electronic apparatus 200 may transmit an instruction to the user terminal 140 to display the weight information. The user terminal 140 may display the weight information in response to the received instruction. Subsequently, the user may input the maximum weight of the swappable battery movable by the user in response to the displayed weight information. For example, the user may input a weight among one or more weights included in the displayed weight information as the maximum weight. The user terminal 140 may transmit the maximum weight information obtained based on the user input of the maximum weight to the electronic apparatus 200.

According to an example embodiment, the electronic apparatus 200 may select the swappable battery to provide to the user among the one or more swappable batteries disposed in the battery swapping station 110 based on user data. For example, the electronic apparatus 200 may select the swappable battery having a weight of less than or equal to the maximum weight of the swappable battery movable by the user among the one or more swappable batteries based on the maximum weight information included in the user data.

According to an example embodiment, the electronic apparatus 200 may obtain driving data associated with driving of the vehicle 150 from the vehicle 150 by using the communication circuit 210. According to another example embodiment, the electronic apparatus 200 may be electrically connected to the vehicle 150 and may obtain the driving data from on-board diagnostics (OBD) that collects various types of data about the vehicle 150. The driving data may include at least one of battery swapping information and driving information of the vehicle 150.

According to an example embodiment, the electronic apparatus 200 may select the swappable battery to provide to the user among the one or more swappable batteries disposed in the battery swapping station 110 based on the driving data. For example, the electronic apparatus 200 may analyze the user's characteristic based on the driving data. Subsequently, the electronic apparatus 200 may select the swappable battery to provide to the user among the one or more swappable batteries based on the analyzed result.

According to an example embodiment, the electronic apparatus 200 may analyze battery usage of the user based on the battery swapping information that indicates a battery swapping cycle of the vehicle 150 included in the driving data. Here, the battery swapping cycle may include information about at least driving time, driving distance, and capacity used before the user swaps a battery of the vehicle 150. For example, the electronic apparatus 200 may analyze an average distance or a maximum distance of driving distances before a plurality of points at which the battery of the vehicle 150 is swapped as the battery usage of the user. As an example, when a driving distance before a first point at which a user swaps a battery of the vehicle 150 is 100 kilometers (km), and a driving distance before a second point at which the user swaps a battery of the vehicle 150 is 120 km, the electronic apparatus 200 may analyze an average distance 110 km of the two driving distances as the battery usage of the user. As another example, the electronic apparatus 200 may analyze the maximum distance 120 km of the two driving distances as the battery usage of the user.

According to an example embodiment, the electronic apparatus 200 may select the swappable battery to provide to the user among the one or more swappable batteries disposed in the battery swapping station 110 based on the analyzed battery usage of the user. According to an example embodiment, the electronic apparatus 200 may select a minimum capacity of the swappable battery to provide to the user based on the analyzed battery usage of the user. For example, when the analyzed battery usage of the user is 110 km, the electronic apparatus 100 may select a capacity corresponding to a driving distance of 110 km as a minimum capacity as a swappable battery with a capacity to support driving distances over 110 km is provided. Subsequently, the electronic apparatus 200 may select the swappable battery with a capacity of over the selected minimum capacity among the one or more swappable batteries.

According to an example embodiment, the electronic apparatus 200 may analyze a driving pattern of the user based on driving information indicating at least one of driving speed and driving acceleration of the vehicle 150 included in the driving data. Here, the driving pattern of the user may include an average driving speed, a maximum driving speed, an aggressive acceleration tendency, and an aggressive deceleration tendency of the user.

According to an example embodiment, the electronic apparatus 200 may select the swappable battery to provide to the user among the one or more swappable batteries disposed in the battery swapping station 110 based on the analyzed driving pattern of the user. According to an example embodiment, the electronic apparatus 200 may select a minimum power output of the swappable battery to provide to the user based on the analyzed driving pattern of the user. For example, when an average driving speed of the user is included in a designated speed range, and a frequency of aggressive acceleration is included in a designated frequency range, the electronic apparatus 200 may determine a power output corresponding to the designated speed range and the designated frequency range as the minimum power output. Subsequently, the electronic apparatus 200 may select the swappable battery that provides a power output of over the selected minimum power output among the one or more swappable batteries.

According to an example embodiment, the electronic apparatus 200 may select the swappable battery to provide to the user among the one or more swappable batteries disposed in the battery swapping station 110 based on the user data and the driving data. According to an example embodiment, the electronic apparatus 200 may select the swappable battery based on maximum weight information included in the user data, battery swapping information included in the driving data, and driving information included in the driving data. For example, the electronic apparatus 200 may select the swappable battery having a weight of less than or equal to a maximum weight based on the maximum weight information, a capacity of over the minimum capacity based on the battery usage of the user, and a power output of over a minimum power output based on the driving pattern of the user among the one or more swappable batteries.

According to an example embodiment, the electronic apparatus 200 may analyze a battery preference of the user based on history data stored in the memory 220. The electronic apparatus 200 may analyze the battery preference of the user based on at least one of composition information, weight information, maximum output information, capacity information, and fee information of a swappable battery that the user previously selected, which are included in the history data. For example, the electronic apparatus 200 may analyze the user's preference with regard to a fee for swappable battery usage based on the fee information of a plurality swappable batteries that the user previously selected. As an example, the electronic apparatus 200 may analyze the user's preference with regard to the fee for the swappable battery usage by calculating an average fee based on driving distances of the plurality of swappable batteries that the user previously selected.

According to an example embodiment, the electronic apparatus 200 may select the swappable battery to provide to the user among the one or more swappable batteries disposed in the battery swapping station 110 based on the analyzed battery preference.

According to an example embodiment, when the swappable battery is selected to provide to the user, the electronic apparatus 200 may provide information about the selected swappable battery. Here, the information about the selected swappable battery may include at least one of composition information, weight information, maximum output information, capacity information, and fee information of the selected swappable battery. For example, the electronic apparatus 200 may provide information about the selected swappable battery to the user terminal 140. In this case, the electronic apparatus 200 may transmit an instruction to the user terminal 140 to display the information about the selected swappable battery. The user terminal 140 may display the information about the selected swappable battery in response to the received instruction. As another example, the electronic apparatus 200 may provide the information about the selected swappable battery to the battery swapping station 110. In this case, the electronic apparatus 200 may transmit an instruction to the battery swapping station 110 to provide the selected swappable battery to the user. The battery swapping station 110 may provide the selected swappable battery to the user among swappable batteries disposed in the plurality of slots 111, 112, 113, 114, 115, and 116 through a series of processes (for example, user authentication and fee payment).

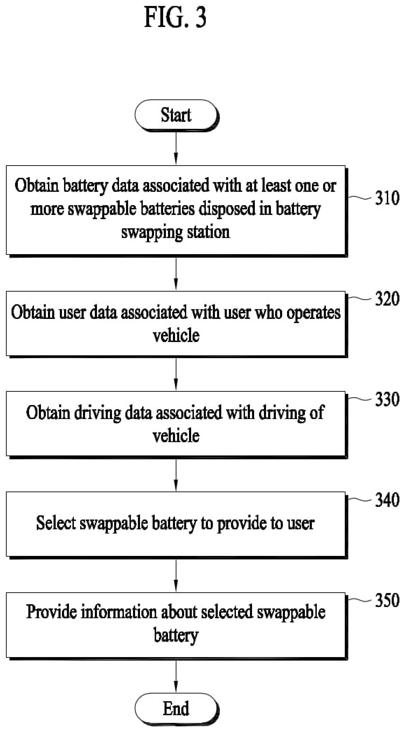

FIG. 3 is a flowchart of an operation of an electronic apparatus according to an example embodiment of the present disclosure. As an operation method of FIG. 3 may be performed by the electronic apparatus 200 of FIG. 2, description overlapping with the aforementioned content may be omitted, and the operation method of FIG. 3 may be described using configurations of FIGS 1 and 2.

An example embodiment illustrated in FIG. 3 is merely an example embodiment, and an operation sequence according to various example embodiments of the present disclosure may be different from what is described in FIG. 3, and some operations illustrated in FIG. 3 may be omitted, or the operation sequence may be changed, or operations may be combined.

Referring to FIG. 3, in operation 310, the electronic apparatus 200 may obtain battery data associated with one or more swappable batteries disposed in the battery swapping station 110. The battery data may include at least one of composition information, weight information, maximum output information, capacity information, and fee information of a swappable battery accommodated in the plurality of slots 111, 112, 113, 114, 115, and 116 of the battery swapping station 110.

In operation 320, the electronic apparatus 200 may obtain user data associated with a user who operates the vehicle 150. The user data may include maximum weight information indicating a maximum weight of a swappable battery movable by the user.

In operation 330, the electronic apparatus 200 may obtain driving data associated with driving of the vehicle 150. The driving data may include at least one of battery swapping information and driving information of the vehicle 150.

In operation 340, the electronic apparatus 200 may select a swappable battery to provide to the user. According to an example embodiment, the electronic apparatus 200 may select the swappable battery to provide to the user among the one or more swappable batteries disposed in the battery swapping station 110 based on the battery data obtained in operation 310, the user data obtained in operation 320, and the driving data obtained in operation 330.

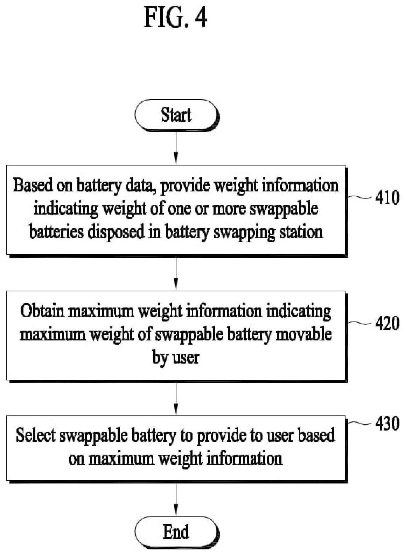

An operation of the electronic apparatus 200 selecting the swappable battery based on the maximum weight information, the battery swapping information, and the driving information may be described in detail through FIGS. 4 to 6 described later.

In operation 350, the electronic apparatus 200 may provide information about the swappable battery selected in operation 340. For example, the electronic apparatus 200 may provide information about the selected swappable battery to the user terminal 140. As another example, the electronic apparatus 200 may provide the information about the selected swappable battery to the battery swapping station 110.

FIG. 4 is a flowchart of an operation of an electronic apparatus according to an example embodiment of the present disclosure. As an operation method of FIG. 4 may be performed by the electronic apparatus 200 of FIG. 2, description overlapping with the aforementioned content may be omitted, and the operation method of FIG. 4 may be described using configurations of FIGS 1 and 2.

An example embodiment illustrated in FIG. 4 is merely an example embodiment, and an operation sequence according to various example embodiments of the present disclosure may be different from what is described in FIG. 4, and some operations illustrated in FIG. 4 may be omitted, or the operation sequence may be changed, or operations may be combined.

Referring to FIG. 4, in operation 410, the electronic apparatus 200 may provide weight information indicating a weight of the one or more swappable batteries disposed in the battery swapping station 110 to the user based on the battery data obtained in operation 310 of FIG. 3. For example, the electronic apparatus 200 may transmit an instruction to the user terminal 140 to display the weight information. The user terminal 140 may display the weight information in response to the received instruction.

In operation 420, the electronic apparatus 200 may obtain maximum weight information indicating a maximum weight of a swappable battery movable by the user. For example, the electronic apparatus 200 may obtain the maximum weight information obtained based on a user input of the maximum weight in response to the weight information displayed through the user terminal 140.

In operation 430, the electronic apparatus 200 may select a swappable battery to provide to the user among the one or more swappable batteries disposed in the battery swapping station 110 based on the maximum weight information obtained in operation 420. For example, the electronic apparatus 200 may select the swappable battery having a weight of less than or equal to the maximum weight of the swappable battery movable by the user among the one or more swappable batteries based on the maximum weight information included in the user data.

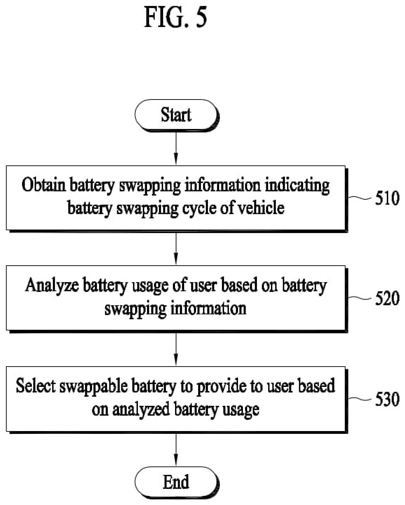

FIG. 5 is a flowchart of an operation of an electronic apparatus according to an example embodiment of the present disclosure. As an operation method of FIG. 5 may be performed by the electronic apparatus 200 of FIG. 2, description overlapping with the aforementioned content may be omitted, and the operation method of FIG. 5 may be described using configurations of FIGS 1 and 2.

An example embodiment illustrated in FIG. 5 is merely an example embodiment, and an operation sequence according to various example embodiments of the present disclosure may be different from what is described in FIG. 5, and some operations illustrated in FIG. 5 may be omitted, or the operation sequence may be changed, or operations may be combined.

Referring to FIG. 5, in operation 510, the electronic apparatus 200 may obtain battery swapping information indicating a battery swapping cycle of the vehicle 150. Here, the battery swapping cycle may include information about at least one of driving time, driving distance, and capacity used before the user swaps a battery of the vehicle 150.

In operation 520, the electronic apparatus 200 may analyze a battery usage based on the battery swapping information obtained in operation 510. For example, the electronic apparatus 200 may analyze an average distance or a maximum distance of driving distances before a plurality of points at which a battery of the vehicle 150 is swapped as a battery usage of the user.

In operation 530, the electronic apparatus 200 may select the swappable battery to provide to the user based on the battery usage analyzed in operation 520. According to an example embodiment, the electronic apparatus 200 may select a minimum capacity of the swappable battery to provide to the user based on the analyzed battery usage of the user. Subsequently, the electronic apparatus 200 may select the swappable battery with a capacity of over the selected minimum capacity among the one or more swappable batteries disposed in the battery swapping station 110.

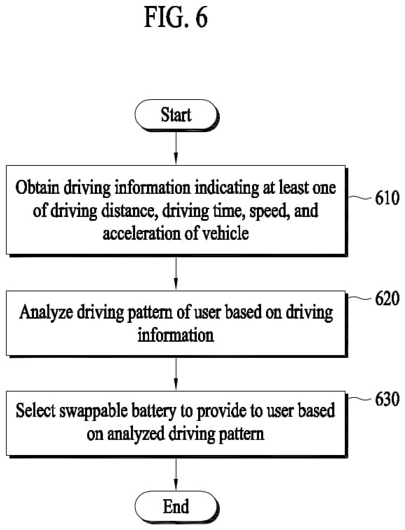

FIG. 6 is a flowchart of an operation of an electronic apparatus according to an example embodiment of the present disclosure. As an operation method of FIG. 6 may be performed by the electronic apparatus 200 of FIG. 2, description overlapping with the aforementioned content may be omitted, and the operation method of FIG. 6 may be described using configurations of FIGS 1 and 2.

An example embodiment illustrated in FIG. 6 is merely an example embodiment, and an operation sequence according to various example embodiments of the present disclosure may be different from what is described in FIG. 6, and some operations illustrated in FIG. 6 may be omitted, or the operation sequence may be changed, or operations may be combined.

Referring to FIG. 6, in operation 610, the electronic apparatus 200 may obtain driving information indicating at least one of driving speed and driving acceleration of the vehicle 150.

In operation 620, the electronic apparatus 200 may analyze a driving pattern of the user based on the driving information obtained in operation 610. Here, the driving pattern of the user may include an average driving speed, a maximum driving speed, an aggressive acceleration tendency, and an aggressive deceleration tendency of the user.

In operation 630, the electronic apparatus 200 may select the swappable battery to provide to the user based on the driving pattern analyzed in operation 620. According to an example embodiment, the electronic apparatus 200 may select a minimum power output of the swappable battery to provide to the user based on the analyzed driving pattern of the user. Subsequently, the electronic apparatus 200 may select the swappable battery with a capacity of over the minimum power output among the one or more swappable batteries disposed in the battery swapping station 110.

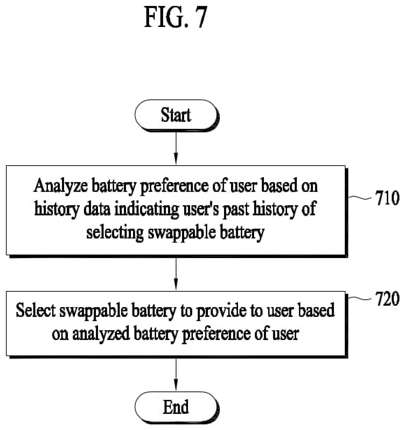

FIG. 7 is a flowchart of an operation of an electronic apparatus according to an example embodiment of the present disclosure. As an operation method of FIG. 7 may be performed by the electronic apparatus 200 of FIG. 2, description overlapping with the aforementioned content may be omitted, and the operation method of FIG. 7 may be described using configurations of FIGS 1 and 2.

An example embodiment illustrated in FIG. 7 is merely an example embodiment, and an operation sequence according to various example embodiments of the present disclosure may be different from what is described in FIG. 7, and some operations illustrated in FIG. 7 may be omitted, or the operation sequence may be changed, or operations may be combined.

Referring to FIG. 7, in operation 710, the electronic apparatus 200 may analyze the user's battery preference based on history data indicating a history of the user previously selecting a swappable battery. According to an example embodiment, the electronic apparatus 200 may analyze the user's battery preference based on at least one of composition information, weight information, maximum output information, capacity information, and fee information of the swappable battery that the user previously selected, which are included in the history data. For example, the electronic apparatus 200 may analyze the user's preference with regard to a fee for swappable battery usage based on the fee information of a plurality swappable batteries that the user previously selected. As an example, the electronic apparatus 200 may analyze the user's preference with regard to the fee for the swappable battery usage by calculating an average fee based on driving distances of the plurality of swappable batteries that the user previously selected.

In operation 720, the electronic apparatus 200 may select the swappable battery to provide to the user among the one or more swappable batteries disposed in the battery swapping station 110 based on the user's battery preference analyzed in operation 710.

The electronic apparatus in accordance with the above-described example embodiments may include a processor, a memory which stores and executes program data, a permanent storage such as a disk drive, a communication port for communication with an external device, and a user interface device such as a touch panel, a key, and an icon. Methods realized by software modules or algorithms may be stored in a computer-readable recording medium as computer-readable codes or program commands which may be executed by the processor. Here, the computer-readable recording medium may be a magnetic storage medium (for example, a read-only memory (ROM), a random-access memory (RAM), a floppy disk, or a hard disk) or an optical reading medium (for example, a CD-ROM or a digital versatile disc (DVD)). The computer-readable recording medium may be dispersed to computer systems connected by a network so that computer-readable codes may be stored and executed in a dispersion manner. The medium may be read by a computer, may be stored in a memory, and may be executed by the processor.

The present example embodiments may be represented by functional blocks and various processing steps. These functional blocks may be implemented by various numbers of hardware and/or software configurations that execute specific functions. For example, the present example embodiments may adopt direct circuit configurations such as a memory, a processor, a logic circuit, and a look-up table that may execute various functions by control of one or more microprocessors or other control devices. Similarly to that elements may be executed by software programming or software elements, the present example embodiments may be implemented by programming or scripting languages such as C, C++, Java, and assembler including various algorithms implemented by combinations of data structures, processes, routines, or of other programming configurations. Functional aspects may be implemented by algorithms executed by one or more processors. In addition, the present example embodiments may adopt the related art for electronic environment setting, signal processing, and/or data processing, for example. The terms "mechanism", "element", "means", and "configuration" may be widely used and are not limited to mechanical and physical components. These terms may include meaning of a series of routines of software in association with a processor, for example.

The above-described example embodiments are merely examples and other embodiments may be implemented within the scope of the following claims.

## Claims

1. An electronic apparatus, comprising:
a communication circuit; and
a processor functionally connected to the communication circuit, and
wherein the processor is,
by using the communication circuit, configured to obtain battery data associated with one or more swappable batteries disposed in a battery swapping station, user data associated with a user who operates a vehicle, and driving data associated with driving of the vehicle,
based on the battery data, the user data, and the driving data, configured to select a swappable battery among the one or more swappable batteries to provide to the user, and
configured to provide information about the swappable battery that is selected.

2. The electronic apparatus of claim 1, wherein the user data includes maximum weight information indicating a maximum weight of a swappable battery movable by the user, and
wherein the processor is, based on the maximum weight information, configured to select the swappable battery having a weight of less than or equal to the maximum weight among the one or more swappable batteries.

3. The electronic apparatus of claim 2, wherein the processor is, by using the communication circuit, based on the battery data, configured to provide weight information indicating a weight of the one or more swappable batteries to a user terminal, and
wherein the maximum weight information is based on an input of the user of the maximum weight in response to the weight information provided through the user terminal.

4. The electronic apparatus of claim 1, wherein the driving data includes battery swapping information indicating a battery swapping cycle of the vehicle, and
wherein the processor is,
based on the battery swapping information, configured to analyze battery usage of the user, and
based on the battery usage that is analyzed, configured to select the swappable battery among the one or more swappable batteries to provide to the user.

5. The electronic apparatus of claim 1, wherein the driving data includes driving information indicating at least one of driving speed and driving acceleration of the vehicle, and
wherein the processor is,
based on the driving information, configured to analyze a driving pattern of the user, and
based on the driving pattern that is analyzed, configured to select the swappable battery to provide to the user among the one or more swappable batteries.

6. The electronic apparatus of claim 1, further comprising a memory configured to store history data indicating a past history of the user of selecting a swappable battery,
wherein the processor is,
based on the history data stored in the memory, configured to analyze a battery preference of the user, and,
based on the battery preference that is analyzed, configured to select the swappable battery to provide to the user among the one or more swappable batteries.

7. The electronic apparatus of claim 6, wherein the battery preference includes a preference of the user with regard to a fee for swappable battery usage.

8. A method of selecting a battery of an electronic apparatus, the method comprising:
obtaining battery data associated with one or more swappable batteries disposed in a battery swapping station, user data associated with a user who operates a vehicle, and driving data associated with driving of the vehicle;
based on the battery data, the user data, and the driving data, selecting a swappable battery among the one or more swappable batteries to provide to the user; and
providing information about the swappable battery that is selected.

9. The method of claim 8, wherein the user data includes maximum weight information indicating a maximum weight of a swappable battery movable by the user, and
wherein the selecting of the swappable battery to provide to the user, based on the maximum weight information, includes selecting the swappable battery having a weight of less than or equal to the maximum weight among the one or more swappable batteries.

10. The method of claim 9, further comprising, based on the battery data, providing weight information indicating a weight of the one or more swappable batteries to a user terminal,
wherein the maximum weight information is based on an input of the user of the maximum weight in response to the weight information provided through the user terminal.

11. The method of claim 8, wherein the driving data includes battery swapping information indicating a battery swapping cycle of the vehicle, and
wherein the selecting of the swappable battery to provide to the user comprises:
based on the battery swapping information, analyzing a battery usage of the user; and,
based on the battery usage that is analyzed, selecting the swappable battery to provide to the user among the one or more swappable batteries.

12. The method of claim 8, wherein the driving data includes driving information indicating at least one of driving distance, driving time, speed, and acceleration of the vehicle, and
wherein the selecting of the swappable battery to provide to the user includes:
based on the driving information, analyzing a driving pattern of the user; and,
based on the driving pattern that is analyzed, selecting the swappable battery to provide to the user among the one or more swappable batteries.

13. The method of claim 8, wherein the selecting of the swappable battery to provide to the user includes:
based on history data indicating a past history of the user of selecting a swappable battery, analyzing a battery preference of the user; and,
based on the battery preference that is analyzed, selecting the swappable battery to provide to the user among the one or more swappable batteries.

14. The method of claim 13, wherein the battery preference includes a preference of the user with regard to a fee for swappable battery usage.
